# EUROPEAN PATENT APPLICATION

(11) **EP 2 290 422 A1**
(43) Date of publication of application: **02.03.2011**
(21) Application number: 09169160.0
(22) Date of filing: 01.09.2009
(51) Int. Cl.: G02B 21/00, G02B 21/36

(54) **Digital microscope**

(71) Applicant: The Gillette Company, Boston, MA 02199 (US)
(72) Inventor: Paskins, Keith, Reading, Berkshire RG2 0DH (GB); Oglesby, Oliver David, Berkshire, RG20 8QY (GB)
(74) Representative: Chandrani, Vandita

(57) **Abstract**

A digital microscope for viewing the surface of an object comprises a housing having a proximal end and a distal end. The distal end forms an opening to the housing. A sensor that receives light reflected from the surface of an object is located towards the proximal end of the housing. The sensor converts the light to a digital image. A lens that focuses light reflected from the object onto the sensor is located within the housing between the sensor and the object to be viewed. A reflective member is located within the opening. In use, light is reflected from the object to the sensor and a portion of the reflected light is directed via the reflective member such that the surface of the object can be viewed simultaneously from two different directions.

## Description

### FIELD OF THE INVENTION

The present invention relates to a digital microscope having a reflective member located at a distal end.

### BACKGROUND OF THE INVENTION

Digital microscopes provide a convenient means for viewing magnified images. Digital microscopes use optics and sensors to record or output a magnified image to a monitor. Digital microscopes can be attached to a standard camera having a built-in screen, or they can be connected directly to a computer using a Universal Serial Bus (USB) connection. When a microscope is attached to a computer, an image can be shown on an associated screen without additional hardware.

Digital microscopes with USB connections that are currently on the market are typically hand-held and can be held like a pen for top-down surface viewing. The size and portable nature of these digital microscopes makes them a useful tool for viewing small areas of large objects where, for example, it is not possible or desirable to place a sample of the object on the stage of a more traditional microscope.

Existing digital microscopes typically have a movable lens positioned parallel to an opening of a body in which the lens is held. To obtain a clear image, it is preferable for the end of the microscope to be pressed against an object being viewed. As a result, these microscopes are only useful for viewing images in two-dimensions, as if from directly above the surface of an object. There is therefore a need to provide an improved digital microscope through which alternative views of the same object can be seen.

### SUMMARY OF THE INVENTION

The present invention relates to a digital microscope for viewing the surface of an object, the microscope comprising a) housing having a proximal end and a distal end, said housing having an opening at the distal end, b) a sensor that receives light reflected from the surface of an object being viewed and converting said light to a digital image, the sensor being located at a proximal end of the housing, c) a lens that focuses light reflected from the object onto the sensor, the lens being located between the sensor and the opening, and d) a reflective member located within the opening, wherein, in use, light is reflected from the object to the sensor and a portion of said reflected light is directed via the reflective member such that the surface of the object can be viewed simultaneously from two different directions.

### BRIEF DESCRIPTION OF THE DRAWINGS

Embodiments of the invention will hereinafter be described, by way of example, with reference to the accompanying drawings, in which:
FIG. 1 is a perspective view of one possible embodiment of a digital microscope.
FIG. 2 is a schematic view of the embodiment shown in Figure 1, showing different paths of light.
FIG. 3 is a schematic view of an alternative embodiment of a digital microscope.
FIG. 4 is a perspective view of an alternative embodiment of a digital microscope.

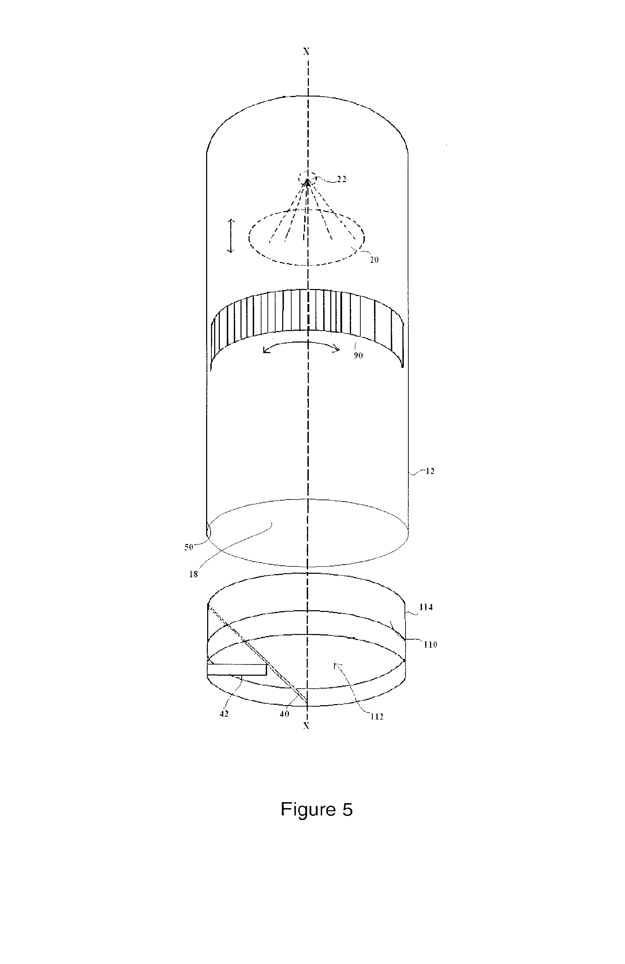

FIG. 5 is an exploded view of the digital microscope shown in Figure 4.

### DETAILED DESCRIPTION OF THE INVENTION

The invention is applicable to digital microscopes, particularly to hand-held digital microscopes.

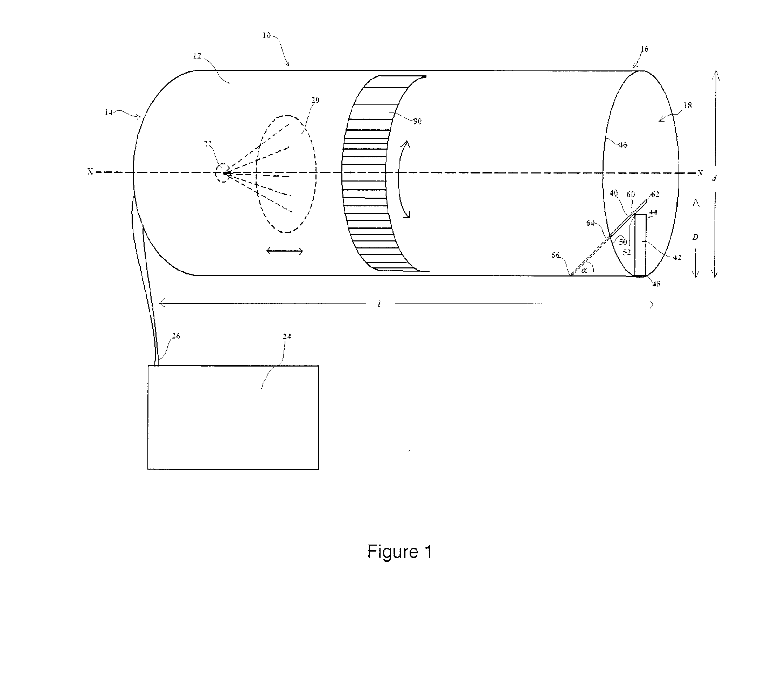

Figure 1 shows a perspective view of a digital microscope 10 formed of a housing 12 having a proximal end 14 and a distal end 16. The distal end 16 forms an opening 18 to the housing 12. In use, the opening 18 is pressed against or placed near objects intended for viewing. A lens 20 is located within the housing, perpendicular to a length, 1, of the housing 12. The lens 20 is movable between the proximal 14 and distal 16 ends of the housing 12 to allow a user to focus on an object to be viewed. A sensor 22 is provided between the lens 20 and the proximal end 14 of the housing. In use, light is reflected from the surface of an object to the lens 20 and subsequently focused on the sensor 22. The sensor 22 is preferably a charge-coupled device (CCD) that captures the reflected light and converts it to digital data that is recorded for the microscope, in the manner of a camera. A resulting image is shown on an associated screen 24. This screen 24 may be directly attached to the microscope 10 (not shown) or the microscope 10 may have a Universal Serial Bus (USB) connection 26 such that the image may be viewed on a computer screen 24.

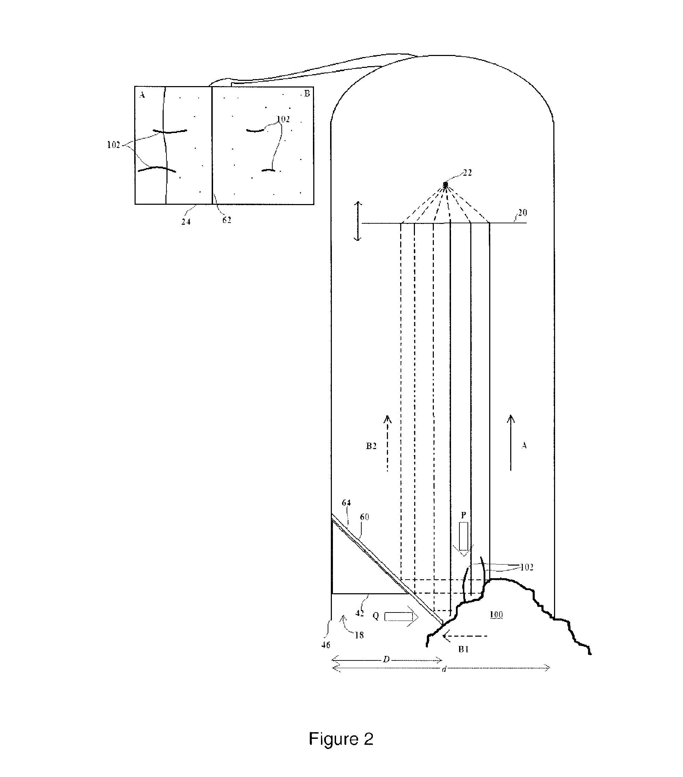

A reflective member 40 is secured to a projection 42 that is located within the opening 18 of the housing. The projection 42 shown in Figure 1 has a first side 44 in line with an edge 46 of the opening 18, a second side 48 adhered to an internal surface 50 of the housing 12, and a third side 52 to which the reflective member 40 is adhered. The projection shown in Figure 1 is rectangular in shape. However, it will be appreciated that any form of projection 42 or securing member can be used to secure the reflective member 40 in the desired position. For example, the projection 42 shown in Figure 2 is triangular in shape. Furthermore, it will be appreciated that the projection 42 may be formed integrally with the housing or secured to an internal surface of the housing in a known manner.

In the embodiment shown in Figure 1, the reflective member 40 is a mirror 60. The mirror 60 is fixed to the third side 50 of the projection. A reflective surface 64 of the mirror has a first edge 66 located adjacent the internal surface 50 of the housing and a second edge 62 substantially in line with the edge 46 of the opening 18. It will be appreciated that the mirror 60 could extend beyond the edges of the projection 42. The reflective surface 64 of the mirror 60 is positioned at an angle, α, of between 30°, 35° or 40° and 50°, 55 our 60° to the internal surface 50 of the housing 12. In a particular embodiment, the mirror 60 is positioned at an angle α of 45" to the internal surface 50 of the housing 12. The second edge 62 of the mirror 60 is positioned away from the internal surface 50 of the housing to which the projection is attached at a distance of between 30%, 35%, 40% or 45% and 55%, 60%, 65% or 70% of the diameter, *d*, of the opening end of the housing. In a particular embodiment, the second edge 62 of the mirror 60 is positioned a distance of 50% of the diameter, *d*, of the opening of the housing away from the internal surface 50 of the housing 12 to which the projection 42 is attached.

Figure 2 shows the different paths of light between an object 100 being viewed and the sensor 22 in a digital microscope 10 as described above. When following a first path of light, path A, light is reflected directly from the object 100 to the lens 20 for focusing on the sensor 22. By contrast, a portion of light that follows a second path of light, path B, is reflected from the object 100 to the reflective surface 64 and subsequently to the lens 20 for focusing on the sensor 22. Light that follows path A is shown on one side of the resulting image and gives a view as if from directly above the object 100, while light that follows path B is shown on the other side of the resulting image giving a view of the object 100 as if from the side. The second edge 62 of the mirror 60 forms a split-line dividing the resulting image in two.

Changing the angle at which the mirror 60 is oriented relative to an internal surface 50 of the housing 12 alters light path B. If an object is expected to protrude through the opening 18 of the housing 12 by a substantial distance, it may be preferable to position the mirror 60 at an angle of 60° our above. By contrast, if the object does not protrude through the opening 18 at all, it may be desirable to decrease the angle to extend the field of view of the image reflected in the mirror 60. However, if the angle becomes too small, the views in the first part of the image and the second part of the image will be approximately the same.

Changing the distance, D, of the second edge 62 of the mirror 60 from the internal surface 50 of the housing 12 determines how the resulting image is split between the two views. As the second edge 62 of the mirror 60 extends further into the opening 18 of the housing 12, the ratio of the size of image A to image B decreases.

The mirror 60 shown in Figures 1 and 2 is a first surface mirror. First surface mirrors have the reflecting surface placed on the front or first surface of the glass to eliminate internal reflection. In the present application, use of a first surface mirror prevents ghosting of the image as seen on screen. It will, however, be appreciated that other mirror types may be used to achieve a similar effect.

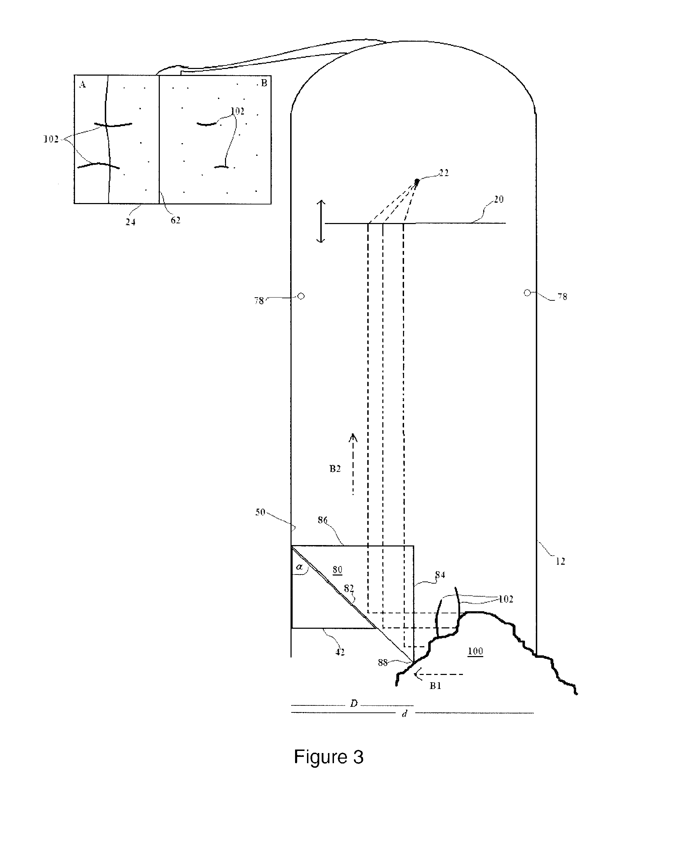

The reflective member 40 may alternatively be a prism 80 as shown in Figure 3. The prism 80 has an inner reflective surface 82 set at an angle of approximately 45° from the internal surface 50 of the housing 12 and facing the proximal end 14 of the housing 12. The prism 80 shown is a right-angled prism having a first surface 84 positioned substantially parallel to a longitudinal axis of the housing 12 and a second surface 86 positioned substantially perpendicular to the longitudinal axis. As described above in the context of a mirror, the inner reflective surface 82 could alternatively be set at an angle of between 30°, 35° or 40° and 50°, 55° or 60° to the internal surface 50 of the housing 12. If the angle of orientation of the inner reflective surface 82 is changed, the orientation of the first 84 and second 86 surfaces is changed accordingly to provide appropriate angles of refraction between the object 100 and the sensor 20.

One edge of the prism 80 is positioned partway through the opening 18 of the housing in line with an edge of the housing 12. The edge of the prism 80 is positioned away from the internal surface 50 of the housing to which the projection is attached at a distance between 30%, 35%, 40% or 45% and 55%, 60%, 65% and 70% of the diameter, *d,* of the opening. In a particular embodiment, the edge of the prism is positioned away from the internal surface of the housing at a distance approximately 50% of the diameter of the opening. It will be appreciated that where the opening has a different shape, e.g. a square, the distance will be calculated to be a percentage of the distance between two opposing internal walls.

The lens 20 shown in Figures 1 and 2 is positioned substantially perpendicular to a longitudinal axis of the housing such that the centre of the lens coincides with a point on the longitudinal axis. The sensor 22 is located between the lens 20 and the proximal end 14 of the housing at some point along the longitudinal axis in line with the centre point of the lens 20. It will, however, be appreciated that the relative positions of the lens and sensor could be different if the lens is arranged to focus onto a different position. Furthermore, multiple sensors and/or lenses could be provided. For example, multiple lenses may be used to provide multiple magnification levels/points. In embodiments, the lens may be bi-focal to ensure that both parts of the image are kept in focus. Additionally, multiple sensors may be used, for example, to detect different colours in the images.

To focus the image on an object to be viewed, the lens 20 is movable between the proximal 14 and distal 16 ends of the housing. The lens 20 may be moved by means of a rack and pinion mechanism, where a rotational member 90, located on the outside of the housing 12, is rotated by a user to result in longitudinal movement of the lens towards or away from the object to be viewed. Other known methods of converting rotational movement to longitudinal movement could similarly be used. Alternatively, a lever (not shown) could be attached to the lens and placed outside the housing 12 to enable a user to slide the lens 20 towards or away from the object to be viewed.

To ensure that objects being viewed are illuminated, the distal end of the housing may be formed of clear material. Alternatively, and/or additionally, one or more light sources 78, shown in Figure 3, may be provided within the housing for illuminating the object to be viewed. Alternatively, and/or additionally, the distal end 16 of the housing could be formed of a clear material.

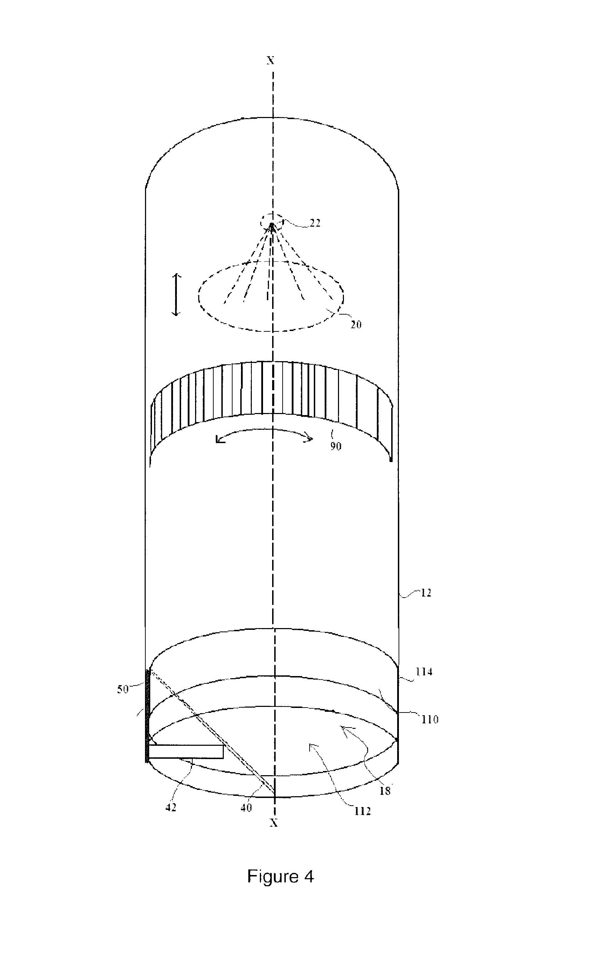

In the previously described embodiments, the projection 42 and reflective member 40 are affixed to an internal surface 50 of the housing 12. It will, however, be appreciated that other means for securing the reflective member 40 in place may be used. For example, in an alternative embodiment, shown in Figure 4, the projection is formed integrally with a detachable cap 110 for affixing to the opening 18 of the housing 12. The cap 110 has an open end 112 such that when the cap is fixed to the housing, the open end 112 of the cap 110 is perceived to be the opening 18 of the housing 12.

The detachable cap 110 has an external wall 114, the contour of which corresponds with the contour of the internal surface 50 of the opening 18 of the housing 12 such that the cap 110 forms a snug fit with the housing 12 and is accordingly retained in place. Alternatively, the cap may be affixed to the housing by other known means, for example, in the form of a screw-cap or by providing correspond male and female components on the cap and housing respectively that are fit together to secure the cap to the housing.

The cap 110, with projection 42, may be made from plastic, metal, foam, wood or any other known material. Depending on the material of the cap 110, the cap may be made from injection molding, rapid prototyping, or other known methods. For example, as an alternative, the cap may be machined from stock material and the cap may be made from e.g. nylon. In particular embodiments, the cap is made of a material that can be wiped clean or sterilized, or the cap may be made of material that enables it to be disposable.

An application of the digital microscope described above may be to look at the surface of skin. In use, a user could press the opening 18 of the microscope, or the open-end 112 of the cap, against an area of skin with the intention that some of the skin would bulge through the opening. Figure 2 shows an example of skin bulging through the opening and illustrates how light reflected from the surface of the skin is directed to the sensor to result in a bi-directional view of the skin from directly above, direction P, and from the side, direction Q.

Specifically, light is reflected from the skin in general directions A and B towards the sensor 22. In direction A, light is reflected directly onto the lens 20 and focused onto the sensor 22. By contrast, in direction B1, light is reflected onto the reflective member 40 and subsequently reflected in direction B2 onto the lens 20 for focusing onto the sensor 22. Light that is reflected directly to the lens 20 is shown in one side of the image A, and light reflected from the reflective member to the lens 20 is shown in the other side of the image B.

The bi-directional view provided by the digital microscope described above is particularly useful for looking at hairs growing through, on or beneath skin and for gaining a topographical appreciation of the interaction between skin and hair. For example, the microscope can be used to look at the topography of skin, ingrown hairs or facial anomalies.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A digital microscope (10) for viewing the surface of an object, the microscope comprising:
a) housing (12) having a proximal end (14) and a distal end (16), said housing (12) having an opening (18) at the distal end (16);
b) a sensor (22) that receives light reflected from the surface of an object (100) being viewed and converts said light to a digital image, the sensor (22) being located at the proximal end (14) of the housing,
c) a lens (20) that focuses light reflected from the object (100) onto the sensor (22), the lens being located between the sensor (22) and the opening (18); and
d) a reflective member (40) located within the opening (18),
wherein, in use, light is reflected from the object (100) to the sensor (22) and a portion of said reflected light is directed via the reflective member (40) such that the surface of the object can be viewed simultaneously from two different directions.

2. A digital microscope as claimed in claim 1, wherein the reflective member (40) is secured at an angle to an internal surface (50) of the housing (20) such that a reflective surface (64, 82) of the reflective member (40) is inclined towards the proximal end (14) of the housing (12).

3. A digital microscope as claimed in claim 1 or claim 2, wherein the reflective member is secured at an angle of between 30°, 35° or 40° and 50°, 55° or 60° to the internal surface (50) of the housing.

4. A digital microscope as claimed in claim 3, wherein the reflective member is secured at an angle of 45° to the internal surface (50) of the housing.

5. A digital microscope as claimed in any of claims 2 to 4, wherein the reflective surface has a first edge (64) located adjacent an internal surface (50) of the housing and a second edge (62) in line with an edge (46) of the opening (18) of the housing (12) at a distance (*D*) away from the internal surface (50) of the housing, the distance (*D*) being between 30%, 35%, 40% or 45% and 55%, 60%, 65% or 70% of the diameter (*d*) across the opening (18) of the housing (12).

6. A digital microscope as claimed in claim 5, wherein the distance (*D*) is 50% of the diameter (*d*) across the opening (18) of the housing (12).

7. A digital microscope as claimed in any preceding claim, further comprising a detachable cap (110) to which the reflective member (40) is attached, wherein the detachable cap is arranged to be secured to the housing (12) such that the reflective member (40) is located in the opening (18) of the housing (12).

8. A digital microscope as claimed in claim 8, further comprising a projection (42) affixed to the internal surface (50) of the housing, wherein the reflective member (40) is secured to the projection (42).

9. A digital microscope as claimed in claim 8, wherein said projection is formed integrally with the detachable cap (110).

10. A digital microscope as claimed in any preceding claim, wherein the reflective member (40) is a mirror (60).

11. A digital microscope as claimed in claim 8, wherein the mirror (60) is a first surface mirror.

12. A digital microscope as claimed in any of the claims 1 to 7, wherein the reflective member (40) is a prism (80) having an internal reflective surface (82).

13. A digital microscope as claimed in any preceding claim, wherein the lens (20) is movable between the proximal end (14) and the distal end (16) of the housing (12).

14. A digital microscope as claimed in any preceding claim, wherein the lens (20) is bi-focal.

15. A detachable cap (110) for securing to a digital microscope (10) as claimed in any of claims 1 to 6,
the detachable cap (110)being shaped to fit the opening (18) of the digital microscope, whereby, in use, an open end (112) of the cap forms the opening (18) of the digital microscope (10), wherein the reflective member(40) is secured to the detachable cap (110).
